# EUROPEAN PATENT SPECIFICATION

(11) **EP 1 788 762 B1**
(45) Date of publication and mention of the grant of the patent: **23.12.2009**
(21) Application number: 05257146.0
(22) Date of filing: 21.11.2005
(51) Int. Cl.: H04L 12/58

(54) **A method for regulating instant messaging traffic**
Verfahren für das Regulieren des sofortigen Nachrichtenübermittlungverkehrs
Une méthode pour régler le trafic de messages instantanés

(43) Date of publication of application: 23.05.2007
(60) Divisional application: 09173808.8
(73) Proprietor: Research In Motion Limited, Waterloo, Ontario N2L 3W8 (CA)
(72) Inventor: Klassen, Gerhard D., Waterloo, Ontario N2T 1H7 (CA)
(74) Representative: Hibbert, Juliet Jane Grace

(56) References cited:
- EP-A- 1 549 013
- US-A1- 2003 065 788
- KHARTABIL H ET AL: "Requirements for Presence Specific Event Notification Filtering draft-ietf-simple-pres-filter-reqs-02.txt" IETF STANDARD-WORKING-DRAFT, INTERNET ENGINEERING TASK FORCE, IETF, CH, 14 August 2003 (2003-08-14), pages 1-12, XP015003379 ISSN: 0000-0004

## Description

### BACKGROUND

### Field

The subject matter hereof relates generally to a messaging solution for stationary computers such as PCs and mobile stations such as cell phones, personal data assistants (PDAs), pagers, handheld computers, laptop computers, and other mobile electronic devices (such stationary computers and mobile stations sometimes collectively referred to herein as computing devices), and more particularly, to a method for regulating message traffic in an instant messaging system utilized by computing devices, particularly mobile stations.

### Description of the Related Art

Instant messaging (IM) is a service (typically subscription based) that alerts computer (such as a PC) or mobile station users when another individual, such as a friend or colleague, running a compatible instant messaging application is online (meaning they are logged in to the service and using the instant messaging application) and allows them to send messages to each other in real time, without the store-and-forward delays inherent in an electronic mail solution. With instant messaging, each user creates a list of other users, commonly referred to as a contact list or a buddy list, with whom he or she wishes to communicate. An instant messaging server keeps track of the online status of each of its subscribed users (often referred to as presence information), and when a user is online and someone from a user's contact list is also online, the server alerts that user and enables immediate contact with the other user.

In an instant messaging system, each user has a client application that resides on his or her computer or mobile station. When a user desires to engage in instant messaging, he or she activates the instant messaging client application. The client application then establishes a connection to the instant messaging server, at which time the user must log in by providing identification and password information. Once logged in (meaning the server has verified the identification and password information), the client application sends to the instant messaging server connection information for the computing device being used (including the IP address of the device and the port assigned to the instant messaging client application) and the names of the other users on the user's contact list. The instant messaging server then creates a temporary file for the user that includes the connection and contact list information, and checks whether any of the other users on the user's contact list are currently logged in. If the instant messaging server determines that any of the contacts on the list are currently logged in, it sends a message back to the user's client application that includes the connection information for each contact that is logged in (informing the user that those contacts are online or "present"). The instant messaging server also sends a message to each of the user's contacts that are logged in that includes the user's connection information (thereby informing those contacts that the user is now online or "present"). The user is now able to send "instant messages" to and receive "instant messages" from each logged in contact from their contact list through the instant messaging server. In addition, because all of the logged in user's have each other's connection information, files may be exchanged directly between users, without going through the instant messaging server.

During the time that any user is logged in to the instant messaging service, the user will receive a message from the instant messaging server any time that a contact on the user's contact list that was previously offline logs in. Similarly, whenever a user logs off, the user's instant messaging client application sends a message to the instant messaging server to terminate the session. The instant messaging server then sends a message to each of the logged in contacts on the user's contact list to inform them that the user is no longer online ("not present"). Also, the user, while logged in, will receive a message from the instant messaging server each time a contact that was logged in logs off.

Thus, in an instant messaging system, presence information is constantly being updated and exchanged by way of frequent messages between the server and each of the users. These frequent messages, which increase network traffic, are problematic for wireless networks because the bandwidth of a wireless network is very limited and the cost of data exchange is very high. This problem is further compounded by the reduction of mobile station battery life resulting from the frequent transmission messages to keep track of presence information, contact lists and contact status.

"Session Initiation Protocol (SIP) Event Notification Extension for Notification Throttling", A. Niemi, Nokia Research Centre discloses a throttle mechanism for limiting the rate of SIP event notifications.

The invention is set out in the claims.

A full understanding can be gained from the following Description of the Preferred Embodiment when read in conjunction with the accompanying drawings in which:
Figure 1 is a block diagram of an embodiment of an instant messaging system;
Figure 2 is a flowchart showing a method of regulating messaging traffic according to a preferred embodiment; and
Figure 3 is a flow chart showing a method of regulating messaging traffic according to an alternative embodiment.

Similar numerals refer to similar parts throughout the specification.

Provided is a method of regulating message traffic in an instant messaging system having a plurality of users that reduces message traffic and helps mobile stations to conserve battery power. The method includes determining whether an event prompting an instant messaging related message for one of the users has occurred, and determining whether a computing device of the one of the users is currently in an idle state if it is determined that the event has occurred. The method further includes updating a store of accumulated instant messaging related information, such as presence information for the other users on the user's contact list, for that user based on the event if it is determined that the computing device is currently in an idle state, and updating the store of accumulated instant messaging related information for the user based on the event and sending a message based on the updated store of accumulated instant messaging related information to the user if it is determined that the computing device is not currently in an idle state. Preferably, the method further includes clearing the store of accumulated instant messaging related information each time the user logs in to the instant messaging system. As a result, instant messaging traffic is reduced because messages are sent to users only when they are not idle. The reduction in traffic is especially advantageous for wireless networks, as they have limited bandwidth.

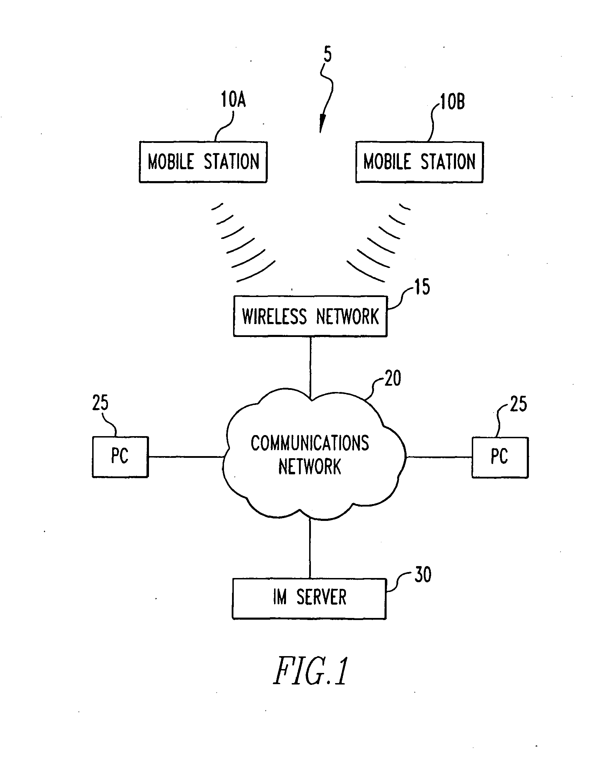

Figure 1 is a block diagram of an instant messaging system 5 described herein. System 5 includes a plurality of mobiles stations 10, such as mobile stations 10A and 10B shown in Figure 1, which may be any type of wireless mobile electronic communications device such as a cell phone, PDA, pager, handheld computer, or laptop computer, to name a few. As is known, each mobile station 10 may be provided with various applications, including, without limitation, one or more communications applications, such as a wireless telephone application, an email application, or a short message service (SMS) application. In addition, each mobile station 10 is provided with an instant messaging client application that enables the user to engage in instant messaging sessions with other similarly equipped users as described above. The term "application" as used herein shall include one or more programs, routines, subroutines, function calls or other type of software or firmware and the like, alone or in combination.

System 5 also includes wireless network 15, which may be any wireless communications network or combination of interconnected networks, including, without limitation, Mobiltex^{™}, DataTAC^{™}, AMPS, TDMA, CDMA, GSM/GPRS, PCS, EDGE, UMTS or CDPD. As is known, wireless network 15 includes a plurality of base stations that perform radio frequency (RF) protocols to support data and voice exchanges with, for example, other mobile stations 10. In turn, wireless network 15 is connected to communications network 20 such as the Internet, thereby enabling communication between mobile stations 10 and other devices that are also connected to communications network 20.

As seen in Figure 1, a plurality of other computing devices, such as stationary PCs 25A and 25B, are also connected to communications network 20. Like mobile stations 10A and 10B, each stationary PC 25 is provided with an instant messaging client application that enables the user to engage in instant messaging sessions with other similarly equipped users as described above.

IM server 30, which may be any type of known instant messaging hardware/software server system, is also connected to communications network 20. Each mobile station 10 and PC 25 is able to communicate electronically with IM server 30 and with one another through communications network 20 in a known manner. Thus, instant messaging system 5 enables any one mobile station 10 or PC 25 to engage in instant messaging with any other mobile station 10 or PC 25 utilizing the service provided by IM server 30.

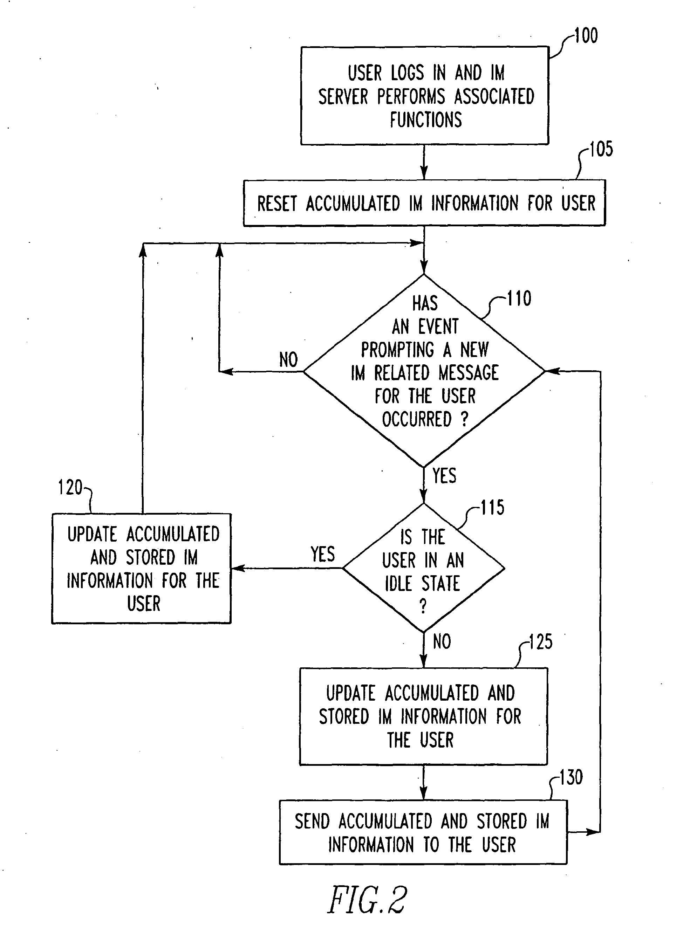

Referring to Figure 2, a flowchart is provided that shows a method of regulating the flow of message traffic in instant messaging system 5 according to a preferred embodiment. This method, as described in greater detail below, reduces wireless traffic resulting from instant messaging and helps to preserve battery power for mobile stations such as mobile stations 10. IM server 30 is provided with and executes one or more routines for implementing the method shown in Figure 2.

The method begins at step 100, where an instant messaging user (preferably a user of a mobile station 10, but also possibly a user of a PC 25 or any other computing device connected to communications network 20) establishes a connection to the IM server 30 and logs in by providing identification and password information. The user's instant messaging client application also sends the user's connection and contact list information to the IM server 30. IM server 30 then performs various log in related functions. Specifically, IM server 30 creates a temporary file for the user that includes the connection and contact list information, and checks whether any of the other users on the user's contact list are currently logged in. If the IM server 30 determines that any of the contacts on the list are currently logged in, it sends a message back to the user's client application, through communications network 20 and possibly wireless network 15, which includes the connection information for each contact that is logged in. The IM server 30 also sends a message that includes the user's connection information to each of the logged in contacts through communications network 20 and possibly wireless network 15.

Under certain circumstances, described below, IM server 30, according to one aspect, is adapted to accumulate and store, in an associated memory, certain instant messaging related information for the users that are registered with IM server 30 (rather than transmit such information to the users as would be the normal procedure). Such instant messaging related information may include, without limitation, the presence status (online or offline) of the contacts (other users) that are on the user's contact list. As is known, the presence status may include specific messages that describe what the other users are doing (e.g., busy, out to lunch, listening to a particular song , and other manually entered descriptions).

Referring again to Figure 2, at step 105, IM server 30 resets (clears) the store of accumulated instant messaging related information for the user that just logged in, in effect providing a clean slate for the user for the current session. Next, at step 110, the IM server 30 determines whether an event has occurred that would, according to the instant messaging protocol being utilized, normally prompt an IM related message for the user. For example, if a contact on the user's contact list changes his or her presence status (i.e., logs in and is thus online or logs off and is thus offline), a message is normally sent to the user's client application through communications network 20 and possibly wireless network 15 notifying the user of this status change. If the answer at step 110 is no, meaning no such event has occurred, then the method returns to step 110 (to in effect continuously monitor the occurrence of events prompting an IM related message for the user). If, however, the answer at step 110 is yes, then, at step 115, IM server 30 determines whether the user is currently in an idle state, meaning that the user is not actively using the mobile station 10 or PC 25. In particular, the client application provided on each mobile station 10 and PC 25 monitors the length of time during which a user is not actively using the keyboard, keypad or other input device of the mobile station 10 or PC 25, and if that time exceeds a threshold amount, the client application causes a message to be sent to the IM Server 30 indicating that the user is in an idle state. The IM server 30 stores the user's state as being idle until such time that a signal is received from the client application indicating that the user is no longer idle (i.e., has started to actively use the device again). If the answer is yes, meaning that the user is currently idle, then, at step 120, the accumulated and stored IM related information for the user is updated based on the event from step 110 to further include information relating thereto (i.e., the information that normally would be sent to the user). As will be appreciated, the initial update will be to a reset (empty) store of accumulated information. Note that, according to one aspect, the event based IM related information is not, at this point, sent to the user since the user was determined to be idle. Instead, it is accumulated for later transmission to the user as described below. The method then returns to step 110. If, however, the answer at step 115 is no, meaning the user is not idle, then, at step 125, the store of accumulated IM related information for the user is updated based on the event from step 110 to further include information relating thereto, and, at step 130, a message based on same or the entirety of the store of accumulated IM related information (as just updated) is sent to the user's instant messaging client application. For example, during the period in which the user is idle, one of the contacts on the user's contact list may change presence status a number of times (e.g., go from online to offline to online). In such a case, only the latest presence status need be sent to the user when the user is no longer idle. As will be appreciated, this may be implemented in Step 125, wherein the updating step includes replacing existing presence status information for a contact with new status information for the contact when a status change occurs.

Thus, instead of repeatedly sending instant messaging related information, such as presence information, to each user regardless of whether the user is idle, such information is accumulated by IM server 30 if the user is in an idle state, and is not delivered to the user until the user is no longer idle. As such, this greatly reduces IM related network traffic and helps to conserve battery power in the case of mobile stations 10. As will be appreciated, during the time that a user is idle, one of the user's contacts may change presence status several times (i.e., move form online to offline to online again), and there is reason that the user needs to know this while idle. In the prior art, a message would be sent to the user upon each state change, even if the user is idle, which creates unnecessary network traffic. The preferred embodiment herein avoids the creation of unnecessary network traffic by only sending messages when they are meaningful to the user (i.e., when they are not idle).

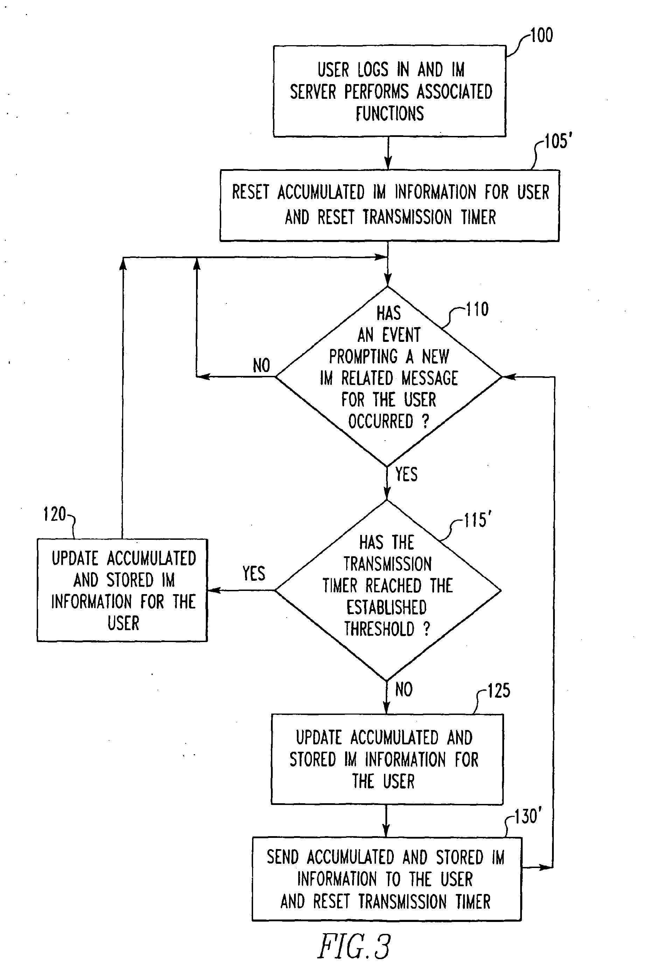

Figure 3 is a flowchart that shows a method of regulating the flow of message traffic in instant messaging system 5 according to an alternative embodiment. The method shown in Figure 3 differs from the method shown in Figure 2 in that, instead of accumulating IM information while the user is idle and then providing accumulated IM information to the user when the user is no longer idle (Figure 2), the method in Figure 3 accumulates and stores IM information for predetermined periods of time and then sends accumulated IM information to the user periodically to cut down on message traffic in the system 5. Thus, Figure 3 differs from Figure 2 in that steps 105', 115' and 130' have replaced steps 105, 115, 130. Specifically, step 105' further includes resetting a transmission timer, step 115' includes determining whether the transmission timer has reached an established threshold value (the desired time for accumulating messages), and step 130' includes resetting the transmission timer each time that IM information is sent to the user.

Figures 2 and 3 thus provide methods that reduce message traffic by accumulating IM information until such time that it is determined that an information send trigger has occurred. In Figure 2, that trigger is the user being in a non-idle state, and in Figure 3, that trigger is the passage of a predetermined amount of time since the last transmission. Other information send triggers are also possible without departing from the scope hereof.

Alternative embodiments of the system 5 shown in Figure 1 may include one or more additional servers to provide additional functionality. For example, an intermediate server may be provided between the wireless network 15 and the IM server 30 to convert the protocol to a protocol suitable for wireless. An intermediate server may also be provided between any client (a mobile station 10 or a PC 25) and the IM server 30 to log or audit traffic. It should be understood that the methods shown in Figures 2 and 3 may be implemented in any such intermediate server instead of the IM server 30.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting as to scope, which is to be given the full breadth of the claims appended and any and all equivalents thereof.

## Claims

1. A method of regulating message traffic in an instant messaging system having a plurality of users, comprising:
determining (110) in an instant messaging server whether an event prompting an instant messaging related message for one of said users has occurred;
determining (115) in said instant messaging server whether a computing device (10, 25) of said one of said users is currently in an idle state if it is determined that said event has occurred;
updating (120) a store of accumulated instant messaging related information for said one of said users based on said event without also sending a message based on said updated store of accumulated instant message related information to said one of said users if it is determined that said computing device is currently in an idle state; and
updating (125) said store of accumulated instant message related information for said one of said users based on said event and sending a message based on said updated store of accumulated instant messaging related information to said one of said users only if it is determined that said computing device is not currently in an idle state.

2. The method according to claim 1, wherein said determining (115) whether a computing device (10, 25) of said one of said users is currently in an idle state is based on a message received from said computing device indicative of whether said computing device is currently idle.

3. The method according to claim 1, further comprising clearing said store of accumulated instant messaging related information when said one of said user logs in to said instant messaging system.

4. The method according to claim 1, wherein said user has a contact list having a plurality of contacts, wherein said event includes a change of presence state for one of said contacts, and wherein said updating steps comprise updating said store of accumulated instant messaging related information to reflect said change of presence state.

## Patentansprüche

1. Verfahren zum Regulieren von Nachrichtenverkehr in einem Instant Messaging(Nachrichtensofortversand)-System mit einer Vielzahl von Benutzern, das aufweist:
Bestimmen (110) in einem Instant Messaging-Server, ob ein Ereignis aufgetreten ist, das eine Instant Messaging-betreffende Nachricht für einen der Benutzer veranlasst;
Bestimmen (115) in dem Instant Messaging-Server, ob eine Computervorrichtung (10, 25) des einen der Benutzer momentan in einem untätigen bzw. inaktiven Zustand ist, wenn bestimmt wird, dass das Ereignis aufgetreten ist;
Aktualisieren (120) eines Speichers von akkumulierter Instant Messaging-betreffender Information für den einen der Benutzer basierend auf dem Ereignis, ohne auch eine Nachricht, die auf dem aktualisierten Speicher der akkumulierten Instant Messaging-betreffenden Information basiert, an den einen der Benutzer zu senden, wenn bestimmt wird, dass die Computervorrichtung momentan in einem inaktiven Zustand ist; und
Aktualisieren (125) des Speichers von akkumulierter Instant Messaging-betreffender Information für den einen der Benutzer basierend auf dem Ereignis und Senden einer Nachricht, die auf dem aktualisierten Speicher der akkumulierten Instant Messaging-betreffenden Information basiert, an den einen der Benutzer nur, wenn bestimmt wird, dass die Computervorrichtung momentan nicht in einem inaktiven Zustand ist.

2. Verfahren gemäß Anspruch 1, wobei das Bestimmen (115), ob eine Computervorrichtung (10, 25) des einen der Benutzer momentan in einem inaktiven Zustand ist, auf einer Nachricht basiert, die von der Computervorrichtung empfangen wird und anzeigt, ob die Computervorrichtung momentan inaktiv ist.

3. Verfahren gemäß Anspruch 1, das weiter aufweist Löschen des Speichers von akkumulierter Instant Messaging-betreffender Information, wenn sich der eine der Benutzer an dem Instant Messaging-System anmeldet.

4. Verfahren gemäß Anspruch 1, wobei der Benutzer eine Kontaktliste hat mit einer Vielzahl von Kontakten, wobei das Ereignis eine Änderung eines Anwesenheitszustands für einen der Kontakte umfasst, und wobei die Aktualisierungsschritte ein Aktualisieren des Speichers von akkumulierter Instant Messaging-betreffender Information aufweist, um die Änderung eines Anwesenheitszustands zu reflektieren.

## Revendications

1. Procédé de régulation du trafic de messages dans un système de messagerie instantanée ayant une pluralité d'utilisateurs, comprenant :
la détermination (110), sur un serveur de messagerie instantanée, de ce qu'il s'est ou non produit un événement invitant à fournir un message lié à la messagerie instantanée à l'un desdits utilisateurs ;
la détermination (115) sur ledit serveur de messagerie instantanée de ce qu'un dispositif informatique (10, 25) dudit un desdits utilisateurs est ou non dans un état de veille à l'instant courant s'il est déterminé que cet événement s'est produit ;
la mise à jour (120) d'une mémoire d'informations accumulées concernant la messagerie instantanée pour ledit un desdits utilisateurs sur la base dudit événement sans envoyer également de messages ayant pour base ladite mémoire mise à jour d'informations accumulées concernant la messagerie instantanée audit un desdits utilisateurs s'il est déterminé que ledit dispositif informatique est à l'instant courant dans un état de veille ; et
la mise à jour (125) de ladite mémoire d'informations accumulées comprenant la messagerie instantanée pour ledit un desdits utilisateurs sur la base dudit événement et l'envoi d'un message sur la base de ladite mémoire mise à jour d'informations accumulées concernant la messagerie instantanée audit un desdits utilisateurs, seulement s'il est déterminé que ledit dispositif informatique n'est pas dans un état de veille à l'instant courant.

2. Procédé selon la revendication 1, dans lequel ladite détermination (115) de ce qu'un dispositif informatique (10, 25) dudit un desdits utilisateurs est ou non à l'instant courant dans un état de veille a pour base un message reçu dudit dispositif informatique, indiquant si ledit dispositif informatique est en veille à l'instant courant.

3. Procédé selon la revendication 1, comprenant en outre l'effacement de ladite mémoire d'informations accumulées concernant la messagerie instantanée lorsque ledit un desdits utilisateurs se connecte audit système de messagerie instantanée.

4. Procédé selon la revendication 1, dans lequel ledit utilisateur dispose d'une liste de contacts ayant une pluralité de contacts, dans lequel ledit événement comprend une modification de l'état de présence pour l'un desdits contacts, et dans lequel lesdites étapes de mise à jour comprennent la mise à jour de ladite mémoire d'informations accumulées concernant la messagerie instantanée pour répercuter ladite modification de l'état de présence.
